# EUROPEAN PATENT APPLICATION

(11) **EP 1 926 310 A1**
(43) Date of publication of application: **28.05.2008**
(21) Application number: 07108312.5
(22) Date of filing: 16.05.2007
(51) Int. Cl.: H04N 5/44

(54) **Image display apparatus and method for tuning channel thereof**

(30) Priority: 24.11.2006 KR 20060117128
(71) Applicant: Samsung Electronics Co., Ltd., Suwon-si, Gyeonggi-Do (KR)
(72) Inventor: Kim, Jong-seung, Giheung-gu, Yongin-si, Gyeonggi-do (KR)
(74) Representative: D'Halleweyn, Nele Veerle Trees Gertrudis

(57) **Abstract**

An image display apparatus and a method of tuning a channel thereof are provided. The image display apparatus includes a power supply unit which supplies a power to drive the image display apparatus, a tuner unit which conducts channel tuning, and a control unit which controls the power supply unit to supply the power, in response to at least one number key signal is input, while the image display apparatus in off state, and which controls the tuner unit to tune to a channel corresponding to a channel number combining the at least one number key signal. Accordingly, the image display apparatus can be turned on with ease, simply by selecting a desired channel number.

## Description

The present invention relates to an image display apparatus and a method for channel tuning thereof. More particularly, the present invention relates to an image display apparatus, which is turned on by selecting a channel number having a plurality of digits, and a method for channel tuning thereof.

According to the prior art, a remote controller is provided along with an image display apparatus such as television (TV) for user convenience. Therefore, users may control operation of the image display apparatus such as power on and off, channel change, and the like, through the remote controller, instead of directly manipulating on the image display apparatus.

A general process of using the remote controller includes manipulating a power key of the remote controller to turn on the image display apparatus, and pressing number keys or channel up or down key to select a desired channel.

The image display apparatus memorizes the channel that was on when the image display apparatus was turned off, such that the memorized channel is turned on in response to a power on signal from the remote controller.

Therefore, the user has to turn on the image display apparatus through the remote controller, and press number keys or channel up or down keys, if he wants to change a channel. In this process, the user generally presses the number keys or the channel up and down keys repeatedly.

In order to resolve inconvenience of having to repeatedly press the keys, a system has been proposed, in which the user can select a desired channel by pressing a number key while the image display apparatus is in a standby mode, such that the selected channel is on upon turning on of the image display apparatus.

To briefly explain the operation of the above system, first, the image display apparatus in standby mode continuously determines whether a pulse is input from the remote controller. Upon determination that a pulse is input from the remote controller, the image display apparatus receives and analyzes the received pulse.

The image display apparatus determines whether a normal pulse is input from the remote controller, and upon determination that the input pulse corresponds to a number key, memorizes the corresponding number as a channel number. After that, the image display apparatus tunes to the memorized channel number, upon turning on.

The above system provides convenience because users can both turn on the image display apparatus and select a desired channel, simply by pressing the number key of the remote controller once. However, this operation has a limit that only a one-digit number can be selected.

Therefore, the above system is not so efficient in the current broadcast systems such as cable broadcast, satellite broadcast, or the like, because these broadcast systems provide a variety of channels numbers having one or more digits.

For example, in order to select two-digit number channel, users have to follow the conventional way of turning on the image display apparatus, and then selecting a desired channel by pressing number keys or channel up or down keys.

Embodiments of the present invention have been developed in order to substantially solve the above and other problems associated with the conventional arrangement and provide the objectives listed below. An object of embodiments of the present invention is to provide an image display apparatus which is not only tuned to a desired channel, but also turned on, by an input of a series of number keys of a remote controller while the image display apparatus is in standby mode.

Therefor the invention is distinguished by an apparatus according to claim 1 and a method according to claim 9.

An aspect of the present invention provides an image display apparatus, comprising a power supply unit which supplies a power to drive the image display apparatus, a tuner unit which conducts channel tuning, and a control unit which controls the power supply unit to supply the power, in response to at least one number key signal is input, while the image display apparatus in off state, and which controls the tuner unit to tune to a channel corresponding to a channel number combining the at least one number key signal.

The at least one number key signal may be input through a remote controller.

The control unit may control the tuner unit to tune to a channel corresponding to a channel number combining a plurality of number key signals, if the plurality of number key signals are input in sequence for a predetermined time period.

A storage unit may be further provided, which stores a number corresponding to a number key signal having an input time exceeding a threshold time period. If a succeeding key signal, having the input time not exceeding the threshold time period, is input, the control unit may control the tuner unit to tune to a channel corresponding to a channel number combining a number stored in the storage unit with the succeeding number key signal.

The control unit may control the tuner unit to tune to a channel corresponding to a channel number combining the stored number, if the succeeding number key signal is not input within a predetermined time of storing the number in the storage unit.

The control unit may control the power supply unit to supply the power at a moment that a plurality of number key signals are input in sequence for a predetermined time period.

An input signal receiving unit which receives the at least one number key signal, and an input signal analyzing unit which analyzes input time of the at least one number key signal, and provides the control unit with the result of analysis, may be further provided.

Another aspect of the present invention provides a method of channel tuning of an image display apparatus, comprising determining whether at least one number key signal is input, while the image display apparatus is in off state, and upon determination that the at least one number key signal is input, turning on the image display apparatus by supplying a power, and tuning to a channel corresponding to a channel number combining the at least one number key signal.

The at least one number key signal may be input through a remote controller.

The determining whether the at least one number key signal is input may comprise determining whether a plurality of number key signals are input in sequence for a predetermined time period, and the tuning to the channel may comprise, upon determination that the plurality of number key signals are input, tuning to a channel corresponding to a channel number combining numbers corresponding to the plurality of number key signals.

The determining whether the at least one number key signal is input may comprise: measuring a length of time during which the number key signal is input, if the number key signal is input, and determining whether a succeeding number key signal, having the input time not exceeding a threshold time period, is input.

The determining whether the at least one number key signal is input may further comprise storing a number corresponding to the input number key signal, if the measured length of time exceeds the threshold time period.

The tuning may comprise tuning to a channel corresponding to a channel number combining the stored number and the succeeding number key signal, if the succeeding number key signal is input.

The tuning may comprise tuning to a channel corresponding to a channel number combining the stored number, if the succeeding number key signal is not input within a predetermined time of storing the number.

The above aspects and features of embodiments of the present invention will become more apparent by describing certain exemplary embodiments of the present invention with reference to the accompanying drawings, in which:

FIG. 1 is a block diagram of an image display apparatus according to an exemplary embodiment of the present invention; and

FIG. 2 is a flowchart illustrating a method for selecting a channel in an image display apparatus according to an exemplary embodiment of the present invention.

Exemplary embodiments of the present invention will now be described in detail with reference to the annexed drawings. In the drawings, the same elements are denoted by the same reference numerals throughout the drawings. In the following description, detailed descriptions of known functions and configurations incorporated herein have been omitted for conciseness and clarity.

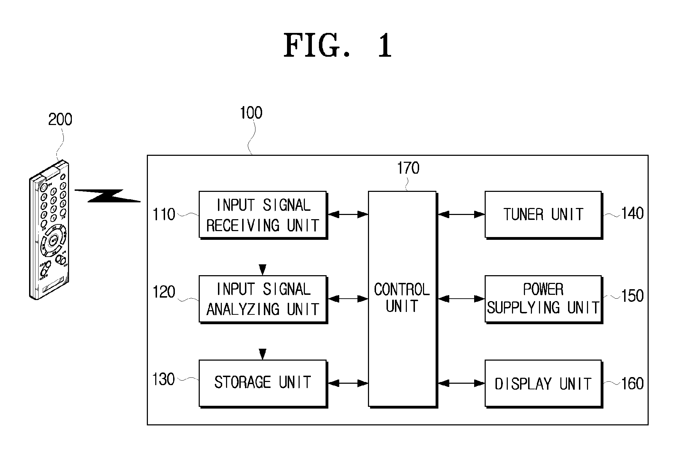

FIG. 1 is a block diagram of an image display apparatus according to an exemplary embodiment of the present invention.

Referring to FIG. 1, the image display apparatus 100 according to an exemplary embodiment of the present invention includes an input signal receiving unit 110, an input signal analyzing unit 120, a storage unit 130, a tuner unit 140, a power supply unit 150, a display unit 160 and a control unit 170.

The image display apparatus 100 may operate in response to a signal from a remote controller 200 having a plurality of user-operable function keys. In general cases, the remote controller 200 sends out a signal using an infrared within a frequency band ranging from about 30 KHz to about 40 KHz, and the signal being emitted from the remote controller 200 may generally include a product code, a remote controller identification code, a key code, and a cyclic redundancy checking (CRC) code.

The input signal receiving unit 110 receives at least one number key from the remote controller 200. While the image display apparatus 100 is in off state, the input signal receiving unit 110 continuously determines whether a signal is received from the remote controller 200.

The input signal receiving unit 110 receives a signal, upon determination based on the product code and the remote controller identification code, that the signal is a remote controller signal to control the image display apparatus 100.

The input signal analyzing unit 120 analyzes the length of time that at least one number key signal is received, and provides the control unit 170 with the result of analysis. In one exemplary implementation, the signal determined at the input signal analyzing unit 120 based on the length of inputting the number key signal includes a discontinuous channel selection signal, a continuous channel selection signal, and a succeeding channel selection signal.

The discontinuous channel selection signal is input by selecting a number key corresponding to an intended channel number, which is same as the general way of selecting a channel using the remote controller 200. The discontinuous channel selection signal is used when the intended channel number has one digit, from number keys 0 to 9 of a plurality of function keys of the remote controller 200.

The continuous channel selection signal is input by pressing a number key of the plurality of function keys of the remote controller 200, which corresponds to a certain digit, but not the last digit, of the desired channel number. The continuous channel selection signal corresponds to the first input number key.

In order to select a channel number having two or more digits, for example, the continuous channel selection signal is input by pressing a first or a second digit of the desired channel number. The continuous channel selection signal is input by selecting one of number keys 0 to 9 from the plurality of function keys of the remote controller 200.

The input signal analyzing unit 120 determines that a continuous channel selection signal is input, if a number key is pressed more than a threshold time. By doing so, the input signal analyzing unit 120 distinguishes the continuous channel selection signal from the discontinuous channel selection signal.

The succeeding channel selection signal is input within a predetermined time of inputting the continuous channel selection signal. The succeeding channel selection signal corresponds to a number key which is input for a threshold time period. The succeeding channel selection signal is input by pressing one of 0 to 9 number keys as the last digit of the intended channel number.

The succeeding channel selection signal is input in the same manner as inputting the discontinuous channel selection signal, but differently from the discontinuous channel selection signal, is input within a predetermined time of inputting the continuous channel selection signal.

For example, the user intending to select channel number '5' presses the number key '5' of the function keys of the remote controller 200 shortly. Accordingly, it is determined by the input signal analyzing unit 120 that the number key signal being received through the input signal receiving unit 110 is a discontinuous channel selection signal.

The user intending to select channel number `21' presses a number key '2' of the function keys of the remote controller 200 for a predetermined time period. Accordingly, the input signal analyzing unit 120 determines that the signal being received through the input signal receiving unit 110 is a continuous channel selection signal.

The user then presses a number key '1' of the function keys of the remote controller 200, and accordingly, the input signal analyzing unit 120 determines that the number key signal being received through the input signal receiving unit 110 is a succeeding channel selection signal.

The storage unit 130 stores the number which correspond to the number key signal being input more than a threshold time. The numbers of the storage unit 130 may be deleted after the number is combined by the control unit 170 and used for the channel tuning, in order to secure more space for storage.

For example, one number may be temporarily stored in the storage unit 130, if the user intends to select two-digit number channel, and two numbers may be temporarily stored in the storage unit 130, if the user intends to select three-digit number channel.

Among the plurality of broadcasts, the tuner unit 140 tunes to a broadcast signal of a channel selected by the user, via an antenna (not shown). The tuner unit 140 may tune to a channel number having one or more digits, according to the control of the control unit 170.

The power supply unit 150 supplies power to drive the image display apparatus, according to the selection of a power key provided in the remote controller 200 or a panel of the image display apparatus 100. In one exemplary implementation, while the image display apparatus 100 is in off state, the power supply unit 150 may turn on the power of the image display apparatus 100 according to the control of the control unit 170. The off state of the image display apparatus 100 comprises a standby state, in which the image display apparatus 100 receives a power only for the standby mode.

The display unit 160 displays a broadcast as the broadcast is tuned by the tuner unit 140 and received.

The control unit 170 controls the overall operation of the image display apparatus 100, and may also control the signal input and output among the input signal receiving unit 110, the input signal analyzing unit 120, the storage unit 130, the tuner unit 140, the power supply unit 150 and the display unit 160.

The control unit 170 controls the power supply unit 150 to turn on the image display apparatus 100, and controls the tuner unit 140 to tune to a corresponding channel, if determination at the input signal analyzing unit 120 indicates that a number key signal being received through the input signal receiving unit 110 is a discontinuous channel selection signal.

The control unit 170 controls such that a corresponding channel number is temporarily stored in the storage unit 130, if the determination at the input signal analyzing unit 120 indicates that a number key signal being received through the input signal receiving unit 110 is a continuous channel selection signal.

The control unit 170 controls such that a previously stored channel number of the storage unit 130 is combined with a channel number corresponding to a succeeding channel selection signal, if the determination at the input signal analyzing unit 120 indicates that a number key signal being received through the input signal receiving unit 110 is the succeeding channel selection signal.

The control unit 170 controls the power supply unit 150 to turn on the image display apparatus 100, and controls the tuner unit 140 to tune to a channel corresponding to the combined channel number.

The control unit 170 may controls the power supply unit 150 to turn on the image display apparatus 200 at a moment that a plurality of number key signals are input in sequence for a predetermined time period.

Additionally, the control unit 170 may control the power supply unit 150 to turn on the image display apparatus 200 at a moment that the first digit key signal, that is, the continuous channel selection signal, is input through the remote controller 200. In one exemplary implementation, the previously memorized channel may be tuned, upon inputting the first digit signal through the remote controller 200, and displayed shortly until the succeeding number key signal is input. Then upon inputting the succeeding channel selection signal, a channel intended by the user is tuned and displayed.

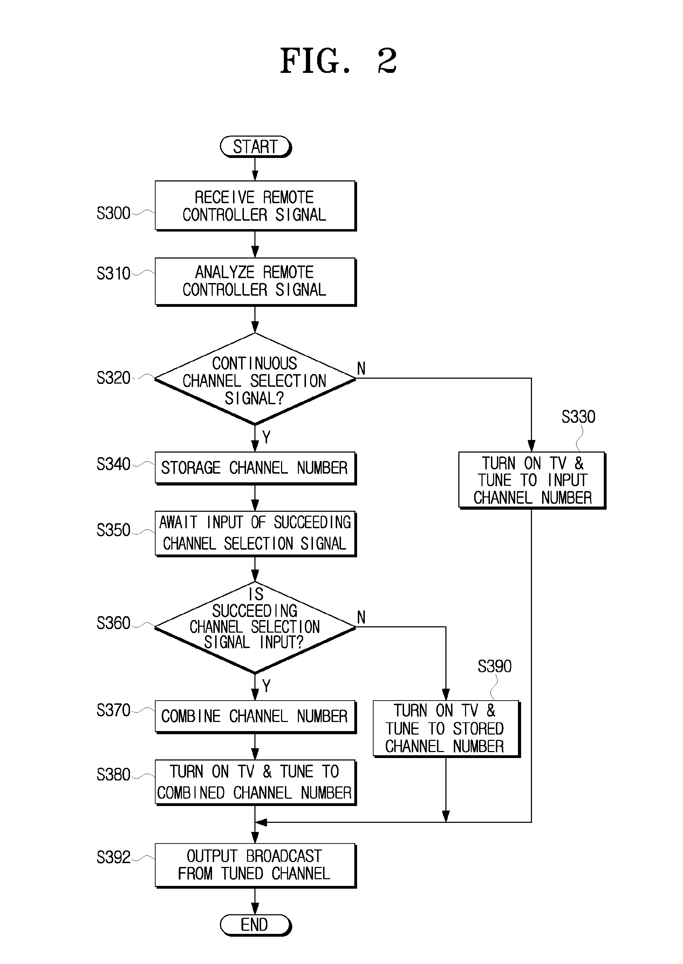

FIG. 2 is a flowchart illustrating a method of channel tuning of an image display apparatus according to an exemplary embodiment of the present invention.

The method of channel tuning of the image display apparatus 100 according to an exemplary embodiment of the present invention will be explained below, with reference to FIGS. 1 and 2.

As a user manipulates one of a plurality of function keys of the remote controller 200, a signal corresponding to a predetermined function is emitted from the remote controller 200, and the image display apparatus 100 receives the signal from the remote controller 200 through the input signal receiving unit 110 (S300).

The input signal received through the input signal receiving unit 110 is analyzed at the input signal analyzing unit 120. If the input signal is a number key signal, the input signal analyzing unit 120 determines whether the input signal is a discontinuous channel selection signal or a continuous channel selection signal (S310).

If the input signal analyzing unit 120 determines that the currently received number key signal is a discontinuous channel selection signal (S320-N), the control unit 170 controls the power supply unit 150 to turn on the image display apparatus 100, and controls the tuner unit 140 to tune to a channel number that corresponds to the discontinuous channel selection signal (S330).

If the analysis of the number key signal at the input signal analyzing unit 120 indicates that the currently received number key signal is a continuous channel selection signal (S320-Y), the control unit 170 temporarily stores a channel number corresponding to the continuous channel selection signal to the storage unit 130 (S340).

The image display apparatus 100 stores the channel number corresponding to the continuous channel selection signal to the storage unit 130 and waits for a succeeding channel selection signal from the remote controller 200 for a predetermined time period (S350).

If a number key signal of one of a plurality of function keys of the remote controller 200 is received through the input signal receiving unit 110 within the predetermined time period of inputting the continuous channel selection signal, the input signal analyzing unit 120 determines whether the number key signal is a succeeding channel selection signal. Upon determination that the succeeding channel selection signal is input (S360-Y), the control unit 170 combines the channel number previously stored in the storage unit 130 with the channel number corresponding to the succeeding channel selection signal (S370).

After the channel numbers are combined, the control unit 170 controls the power supply unit 150 to turn on the image display apparatus 100, and controls the tuner unit 140 to tune to a channel corresponding to the combined channel number (S380).

If a succeeding channel selection signal is not received through the input signal receiving unit 110 within the predetermined time of inputting the continuous channel selection signal (S360-N), the control unit 170 controls the power supply unit 150 to turn on the image display apparatus 100, and controls the tuner unit 140 to tune to a channel corresponding to the channel number stored in the storage unit 130 (S390).

As the tuner unit 140 tunes to a channel in S330, S380, S390, a broadcast of the tuned channel is output through the display unit (S392). As a result, user can view the intended broadcast, without manipulating a separate power key of the remote controller 200.

As explained above, by selecting number keys corresponding to not only one-digit channel number, but also two ore more digit channel number, the image display apparatus 100 is turned on, and the intended channel is tuned.

Because the image display apparatus 100 according to exemplary embodiments of the present invention analyzes an input signal from the remote controller 200 and determines the digits of the input channel number, user may turn on the image display apparatus by selecting one or more digit channel number. Additionally, because the channel intended by the user is tuned, upon turning on of the image display apparatus 100, inconvenience of having to turn on the image display apparatus 100 and then tune to a desired channel, is avoided.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. Image display apparatus (100), comprising:
a power supply unit (150) which supplies a power to drive the image display apparatus;
a tuner unit (140) which conducts channel tuning; **characterized in that** the apparatus further comprises:
a control unit (170) which controls the power supply unit (150) to supply the power, in response to the input of at least one number key signal, while the image display apparatus is in off state, and which controls the tuner unit (140) to tune to a channel corresponding to a channel number combining the at least one number key signal.

2. Image display apparatus of claim 1, **characterized in that** the at least one number key signal is input through a remote controller (200).

3. Image display apparatus according to any of the previous claims, **characterized in that** the control unit (170) controls the tuner unit (140) to tune to a channel corresponding to a channel number combining a plurality of number key signals, if the plurality of number key signals are input in sequence for a predetermined time period.

4. Image display apparatus according to claim 1 or 2, **characterized in that** the apparatus further comprises a storage unit (130) which stores a number corresponding to a number key signal having an input time exceeding a threshold time period, and wherein,
if a succeeding key signal, having an input time not exceeding a predetermined time period, is input, the control unit (170) controls the tuner unit (140) to tune to a channel corresponding to a channel number combining the number stored in the storage unit (130) with the succeeding number key signal.

5. Image display apparatus of claim 4, **characterized in that** the control unit (170) controls the tuner unit (140) to tune to a channel corresponding to the number stored in the storage unit (130), if the succeeding number key signal is not input within a predetermined time of storing the number in the storage unit.

6. Image display apparatus according to any of the previous claims, **characterized in that** the control unit (170) controls the power supply unit (150) to supply the power at a moment that a plurality of number key signals are input in sequence for a predetermined time period.

7. Image display apparatus according to any of the previous claims, **characterized in that** the apparatus further comprises:
an input signal receiving unit (110) which receives the at least one number key signal; and
an input signal analyzing unit (120) which analyzes input time of the at least one number key signal, and provides the control unit (170) with the result of analysis.

8. Image display apparatus according to any of the previous claims, **characterized in that** the at least one number key signal comprises a continuous channel selection signal inputted during more than a threshold time, and a discontinuous channel selection signal inputted within a predetermined time from the continuous channel selection signal.

9. Method of channel tuning of an image display apparatus, **characterized by**:
determining whether at least one number key signal is input, while the image display apparatus is in off state (5300,5310,5320); and
upon determination that the at least one number key signal is input, turning on the image display apparatus by supplying a power, and tuning to a channel corresponding to a channel number combining the at least one number key signal (5330,5380,5390).

10. Method of claim 9, **characterized in that** the at least one number key signal is input through a remote controller.

11. Method of claim 9 or 10, **characterized in that** the determining whether the at least one number key signal is input comprises determining whether a plurality of number key signals are input in sequence for a predetermined time period (5350), and
the tuning to the channel comprises, upon determination that the plurality of number key signals are input (5360), tuning to a channel corresponding to a channel number combining numbers corresponding to the plurality of number key signals (5380).

12. Method of claim 9 or 10, **characterized in that** the determining whether the at least one number key signal is input comprises:
measuring a length of time during which the number key signal is input, if the number key signal is input; and
determining whether a succeeding number key signal, having the input time not exceeding a threshold time period, is input.

13. Method of claim 12, **characterized in that** the determining whether the at least one number key signal is input further comprises storing a number corresponding to the input number key signal, if the measured length of time exceeds the threshold time period (5340).

14. Method of claim 13, **characterized in that** the tuning comprises tuning to a channel corresponding to a channel number combining the stored number and the succeeding number key signal, if the succeeding number key signal is input.

15. Method of claim 12, **characterized in that** the tuning comprises tuning to a channel corresponding to a channel number combining the stored number, if the succeeding number key signal is not input within a predetermined time of storing the number (5390).

16. Method according to any of the previous claims, **characterized in that** determining whether at least one number key signal is input comprises determining whether a continuous channel selection signal is inputted during more than a threshold time and whether a discontinuous channel selection signal is inputted within a predetermined time from the continuous channel selection signal.
